(19) Europäisches Patentamt
European Patent Office
Office européen des brevets

(11) Veröffentlichungsnummer: **0 057 158**
**B1**

(12) # EUROPÄISCHE PATENTSCHRIFT

(45) Veröffentlichungstag der Patentschrift: **29.05.85**

(51) Int. Cl.⁴: **C 09 B 67/24**, C 09 B 67/32, D 06 L 3/12, D 06 P 1/647

(21) Anmeldenummer: **82810017.2**

(22) Anmeldetag: **18.01.82**

(54) **Feste, kaltwasserlösliche Präparate nichtreaktiver, metallfreier anionischer Farbstoffe und Verfahren zur Herstellung und zur Verwendung der Präparate.**

(30) Priorität: **23.01.81 DE 3102178**
**23.01.81 DE 3102177**
**17.03.81 CH 1797/81**
**17.03.81 CH 1798/81**

(43) Veröffentlichungstag der Anmeldung:
**04.08.82 Patentblatt 82/31**

(45) Bekanntmachung des Hinweises auf die Patenterteilung:
**29.05.85 Patentblatt 85/22**

(84) Benannte Vertragsstaaten:
**BE CH DE FR GB IT LI**

(56) Entgegenhaltungen:
**FR - A - 2 243 994**
**GB - A - 982 735**
**US - A - 2 834 773**
**US - A - 3 963 418**
**US - A - 4 014 646**

**CHEMICAL ABSTRACTS, Band 93, Nr. 26, Dezember 1980, Seite 87, Nr. 241134x, Columbus, Ohio, USA**
**CHEMICAL ABSTRACTS; Band 92, Nr. 20, Mai 1980, Seite 68, Nr. 165214k, Columbus, Ohio, USA**

(73) Patentinhaber: **CIBA-GEIGY AG, Postfach, CH-4002 Basel (CH)**

(72) Erfinder: **Balliello, Paolo, Dr., Burstelstrasse 12, D-7888 Rheinfelden 8 (DE)**
Erfinder: **Erzinger, Paul, Oristalstrasse 58/10, CH-4410 Liestal (CH)**
Erfinder: **Tempel, Ernst, Dr., Kilchgrundstrasse 45, CH-4125 Riehen (CH)**

**EP 0 057 158 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft feste, kaltwasserlösliche Präparate nichtreaktiver, metallfreier anionischer Farbstoffe, ein Verfahren zu ihrer Herstellung und ihre Verwendung zum Färben oder Bedrucken von Textilmaterial.

Feste Farbstoffpräparate von wasserlöslichen anionischen und kationischen Farbstoffen sind bereits bekannt. Diese enthalten üblicherweise den Farbstoff sowie weitere Zusätze, wie z. B. ein Dispergiermittel, meistens ein solches anionischer oder nichtionogener Art, Coupagemittel, Netzmittel usw. Diese Präparate weisen jedoch oft Nachteile auf, wie eine ungenügende Kaltwasserlöslichkeit, mangelhafte Redispergierbarkeit und/oder Benetzbarkeit in Wasser.

Der vorliegenden Erfindung lag die Aufgabe zugrunde, feste Farbstoffpräparate zu entwickeln, welche die genannten Nachteile nicht aufweisen.

Diese Aufgabe wird durch die erfindungsgemäßen festen Farbstoffpräparate gelöst, welche

a) 30—90 Gew.% nichtreaktiven, metallfreien, anionischen Farbstoff,
b) 1—25 Gew.% einer aliphatischen Aminocarbonsäure oder deren Salz, sowie
c) 0—50 Gew.% weitere Zusätze enthalten und durch Sprühtrocknen einer wäßrigen Lösung oder Suspension der Komponenten a) bis c) erhalten werden.

Überraschenderweise zeigen derartige Präparate eine sehr gute Kaltwasserlöslichkeit und Benetzbarkeit und sind einwandfrei redispergierbar. Ein weiterer Vorteil gegenüber den bekannten Präparaten dieser Farbstoffe ist deren erhöhtes Schüttgewicht.

Die Verwendung von aliphatischen Aminocarbonsäuren oder deren Salzen zur Herstellung von Farbstoffpräparaten ist bereits in der Literatur beschrieben, und zwar in Verbindung mit Reaktivfarbstoffen (Chem. Abstr. 93/26 (1980) 231134x), kupferhaltigen Disazofarbstoffen (US-A-2 834 773 und GB-A-982 735) und kationischen Farbstoffen (Chem. Abstr. 92/20 (1980) 165214k). Der Aminocarbonsäurezusatz erfolgt in den bekannten Präparaten beispielsweise zur Stabilisierung des Farbstoffs. So werden die, in dem US-Patent und der britischen Patentschrift genannten Metallkomplexfarbstoffe z. B. durch Äthylendiamintetraessigsäure gegen Zersetzung geschützt und können so über längere Zeiträume ohne Verlust an Farbstärke gelagert werden.

Als anionische Farbstoffe kommen im vorliegenden beispielsweise anionische Nitro-, Aminoketon-, Ketonimin-, Methin-, Nitrodiphenylamin-, Chinolin-, Aminonaphthochinon- oder Cumarinfarbstoffe in Frage und insbesondere Anthrachinon- und metallfreie Azofarbstoffe, wie Monoazo-, Disazo- und Polyazofarbstoffe.

Unter Farbstoffen sollen auch optische Aufheller verstanden werden. Es kommen z. B. Aufheller der folgenden Verbindungsklassen in Frage: Stilbene, Cumarine, Benzocumarine, Pyrene, Pyrazine, Pyrazoline, Oxazine, Mono- oder Dibenzoxazolyl- oder -imidazolylverbindungen, Aryltriazol- und v-Triazol-Derivate sowie Naphthalsäureimide.

Die anionischen Farbstoffe enthalten mindestens eine wasserlöslichmachende Gruppe, wie z. B. eine Carbonsäuregruppe oder insbesondere eine Sulfogruppe.

Besonders geeignet sind Azo- oder Anthrachinonfarbstoffe, mit mindestens einer Sulfogruppe und unter diesen vor allem diejenigen, welche zusätzlich mindestens eine Methoxy-, Amino-, $C_1$—$C_6$-Alkylamino- oder Di-($C_1$—$C_6$)-Alkylaminogruppe aufweisen.

Die Farbstoffe können gegebenenfalls auch in Mischungen miteinander vorliegen.

Die erfindungsgemäß verwendbaren Farbstoffe sind bekannt und können nach an sich bekannten Methoden hergestellt werden.

Die erfindungsgemäß verwendbaren aliphatischen Aminocarbonsäuren und deren Salze sind Verbindungen, welche mehrere funktionelle Gruppen aufweisen, die in wäßriger Lösung ionisieren können und dabei — je nach den Bedingungen des Mediums — den Verbindungen anionischen oder kationischen Charakter verleihen.

Als erfindungsgemäß verwendbare aliphatische Aminocarbonsäuren kommen beispielsweise die folgenden Verbindungen in Frage:

A. Aliphatische Mono-$\alpha$-aminosäuren

Beispielsweise kommen solche der Formel I

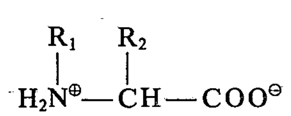

in Frage, worin

$R_1$ Wasserstoff oder Methyl und

$R_2$ Wasserstoff, einen aliphatischen Rest mit einfacher oder verzweigter Kette, der durch $-OH$ substituiert sein kann, vorzugsweise $-(CH_2)_2OH$ oder $C_1-C_5$-Alkyl

bedeuten. Eine bevorzugte Verbindung dieser Klasse ist Glycin.

B. Monoiminopolycarbonsäuren

Beispielsweise kommen solche der Formel II

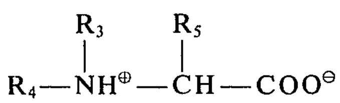

oder der Formel III

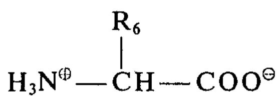

in Frage, worin

$R_3$ 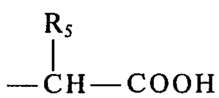 oder $-(CH_2)_2COOH$,

$R_4$ Wasserstoff, 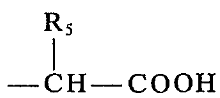 oder Alkyl$(C_1-C_{12})$,

$R_5$ Wasserstoff, einen aliphatischen Rest, insbesondere einen $C_1-C_5$-Alkylrest mit einfacher oder verzweigter Kette, der durch $-COOH$ und/oder $-OH$ substituiert sein kann, und

$R_6$ einen durch $-COOH$ substituierten aliphatischen Rest, insbesondere einen $C_1-C_5$-Alkylrest mit einfacher oder verzweigter Kette, der auch durch $-OH$ substituiert sein kann, bedeuten.

Eine bevorzugte Verbindung dieser Klasse ist die Nitrilotriessigsäure.

C. Bis-$\alpha$-iminocarbonsäuren

Beispielsweise kommen solche der Formel IV

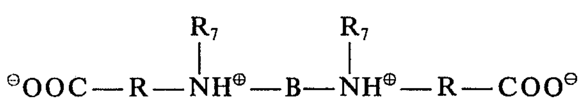

in Frage, worin

R die Gruppe

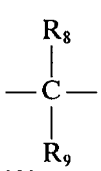 oder $-(CH_2)_2-$,

$R_7$ Wasserstoff, einen $C_1-C_{12}$-Alkylrest, der durch Hydroxy, Alkoxy und/oder Alkylamino substituiert sein kann, oder $-R-COOH$,

$R_8$ und $R_9$ unabhängig voneinander Wasserstoff oder Alkyl$(C_1-C_5)$ und

B die direkte Bindung oder einen zweiwertigen aliphatischen Rest

bedeuten. Als Beispiel dieser Klasse sei die Ethylendiamin-N,N'-tetraessigsäure genannt.

Bevorzugte Verbindungen dieser Klasse sind solche der Formel IVa

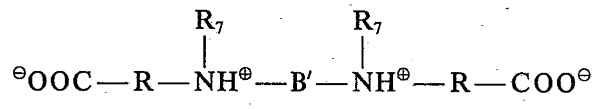

worin R und $R_7$ die oben angegebenen Bedeutungen haben, und B'

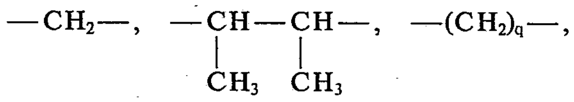

einen zweiwertigen Ether- oder Thioetherrest bedeutet, wobei q eine ganze Zahl von 3 bis 6 ist, und wenn ein $R_7$ oder beide $R_7$ Wasserstoff sind, kann q auch 2 sein.

D. Polyethylenimin-N-polyessigsäuren

Beispielsweise kommen solche der Formel V

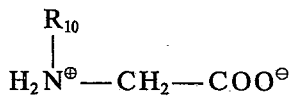

in Frage, worin

R

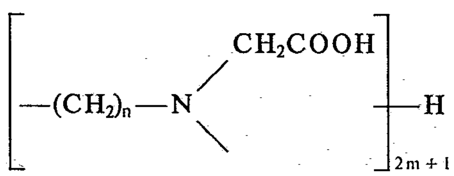

in der n eine Zahl von 1 bis 3, vorzugsweise 2, und m eine ganze Zahl, insbesondere von 1 bis 10, vorzugsweise von 2 bis 8, sind, bedeuten.

E. Lineare Betaine

Beispielsweise kommen solche der Formel VI

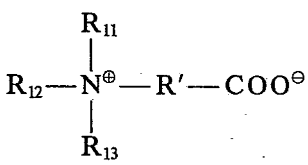

in Frage, worin

R' einen zweiwertigen aliphatischen Rest mit 1 bis 3 C-Atomen, insbesondere die Gruppe

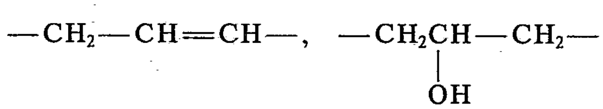

oder vorzugsweise $-(CH_2)_n$, in der n eine Zahl von 1 bis 3,

$R_{11}$ und $R_{13}$ Methyl und

$R_{12}$ einen gegebenenfalls substituierten aliphatischen Rest, insbesondere mit 1 bis 12 C-Atomen, vorzugsweise $-(CH_2)_n-NH-CO-C_pH_{2p+1}$, in der n eine ganze Zahl von 1 bis 3 und p eine ganze Zahl, insbesondere 1 bis 5, bedeuten.

Ein bevorzugtes Beispiel dieser Klasse ist die Verbindung der Formel

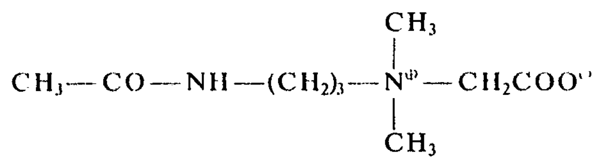

Die erfindungsgemäß verwendbaren aliphatischen Aminocarbonsäuren sind bekannt und können nach bekannten Verfahren hergestellt werden. Die Salze dieser Verbindungen sind vorzugsweise deren Alkalisalze, insbesondere Kalium- oder Natriumsalze.

Die Präparate können auch Gemische von zweien oder mehreren dieser aliphatischen Aminocarbonsäuren enthalten.

Daneben können die Präparate noch weitere Zusätze, wie übliche Coupagemittel, z. B. Dextrin, Harnstoff oder anorganische Salze, wie Natriumchlorid oder Natriumsulfat, sowie Netzmittel, wie Nonylphenoldiglykoläthersulfat oder Dodecylbenzolsulfonat, anionische und nichtionogene Dispergatoren und/oder Entstäubungsmittel enthalten.

Vorzugsweise enthalten die erfindungsgemäßen Präparate 2—20 Gew.%, insbesondere 3—10 Gew.% einer der genannten aliphatischen Aminocarbonsäuren oder deren Salze.

Bevorzugt sind die Präparate, welche außerdem 2—50 Gew.% anionische Dispergiermittel enthalten.

Bei den anionischen Dispergiermitteln handelt es sich um die üblichen Dispergiermittel für anionische Farbstoffe, z. B. um Kondensationsprodukte von aromatischen Sulfonsäuren mit Formaldehyd. Besonders geeignet sind jedoch Ligninsulfonate, z. B. die unter der Bezeichnung Sulfitablauge-Pulver erhältlichen Verbindungen. Es können auch Gemische dieser Dispergiermittel verwendet werden.

Die erfindungsgemäßen festen Farbstoffpräparate werden hergestellt, indem man den anionischen Farbstoff in Wasser anschlämmt, eine aliphatische Aminocarbonsäure oder deren Salz, gegebenenfalls weitere Zusätze hinzufügt und miteinander vermischt oder vorzugsweise vermahlt. Anschließend wird dann die erhaltene Lösung oder Suspension getrocknet, und zwar mittels Sprühtrocknung.

Die Farbstoffe bzw. optischen Aufheller können dabei z. B. als getrocknete Ware oder als Preßkuchen oder vorzugsweise aus dem letzten Syntheseschritt direkt aus der Lösung, Dispersion oder Suspension vor der Isolierung, wie z. B. nach beendeter Kupplung, eingesetzt werden.

Falls vermahlen wird, kann man auch einen Teil der Komponente erst nach dem Vermahlen zusetzen. Es ist auch möglich, zunächst nur einen Teil der Komponenten miteinander zu vermischen und den Rest, z. B. das Entstäubungsmittel, erst zum Schluß, z. B. nach dem Trocknen, zuzugeben. Es ist jedoch vorteilhaft, die erfindungsgemäß verwendbare Aminocarbonsäure schon vor der Mahlung zuzugeben. Dadurch wird in vielen Fällen die Viskosität herabgesetzt. In manchen Fällen wird durch Zusetzung der erfindungsgemäß verwendbaren Aminocarbonsäure die Mahldauer verkürzt oder sogar überflüssig gemacht.

Verwendung finden die erfindungsgemäßen Farbstoffpräparate zur Herstellung von Färbebädern, Klotzflotten oder Druckpasten. Diese eignen sich zum Färben oder Bedrucken vor allem von Textilmaterial, z. B. solchem aus Cellulosematerial, Polyacrylnitril und aus natürlichem und insbesondere synthetischem Polyamid.

Die folgenden Beispiele dienen zur Erläuterung der Erfindung. Teile bedeuten Gewichtsteile und Prozente Gewichtsprozente.

## Beispiel 1

a) Man schlämmt 63,8 Teile des Rohfarbstoffes der Formel

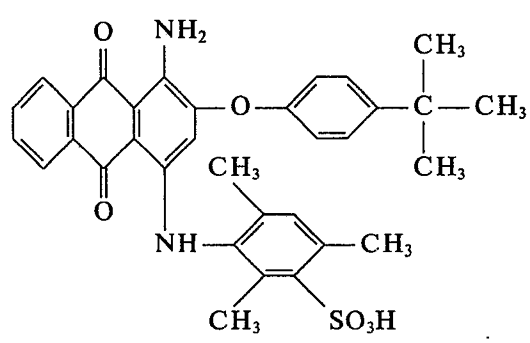

in ca. 150 ml Wasser an, gibt 19,3 Teile Naphthalinsulfonsäure-Formaldehyd-Kondensationsprodukt (Na-Salz), 4,8 Teile Ethylendiamintetraessigsäure (Na-Salz) und 12,1 Teile des amphoteren Hilfsmittels der Formel

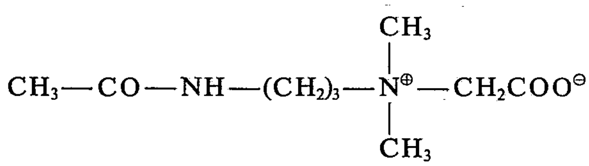

zu und mahlt die erhaltene Anschlämmung drei Stunden in einer Perlmühle. Anschließend wird die Suspension sprühgetrocknet. Man erhält ein in kaltem Wasser in einer Menge von mehr als 30 g/l gut lösliches Farbstoffpräparat, welches gut benetzbar und redispergierbar ist und für das Bedrucken oder Färben von Textilmaterial aus Polyamid nach herkömmlichen Methoden gut geeignet ist.

Das Präparat läßt sich leicht mit wenig Wasser anschlämmen, während ein analog, aber ohne Ethylendiamintetraessigsäure (Na-Salz) und das amphotere Hilfsmittel hergestellte Präparat eine wesentlich höhere Viskosität aufweist.

b) Ersetzt man das amphotere Hilfsmittel durch eine entsprechende Menge Glycin, so erhält man ein Farbstoffpräparat mit ähnlich guten Eigenschaften.

Bestimmung der Kaltwasserlöslichkeit (KWL) des Farbstoffpräparates:

(Anschlämm-Methode)

6 g des zu prüfenden Farbstoff-Präparates werden in einem 400 ml Becherglas in 6 g Industriewasser angeschlämmt. Weiteres Wasser bis auf insgesamt 200 g werden dann zugegeben und mit einem magnetischen Rührer (40 × 7 mm, bei 750 U/Min.) 120 Sekunden gerührt. Die auf diese Weise hergestellte Flotte wird dann durch eine doppelte Lage Papierfilter (SS 1450 CV Durchmesser 7 cm) filtriert.

Ein Präparat wird dann als kaltwasserlöslich bezeichnet, wenn nach der oben beschriebenen Testmethode auf dem Papierfilter und im Becherglas kein Rückstand verbleibt.

### Beispiel 2

Nach der im Beispiel 1 beschriebenen Arbeitsweise stellt man leicht redispergierbare, gut benetzbare, kaltwasserlösliche Farbstoffpräparate der folgenden Zusammensetzung her:

a) 44,4% Rohfarbstoff der Formel

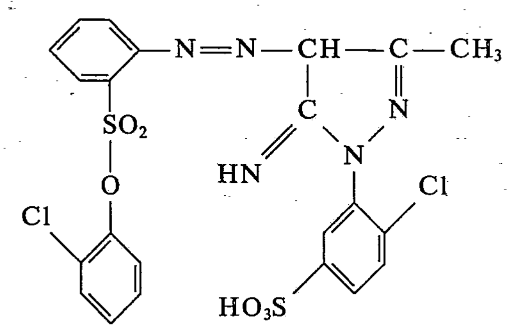

4,9% Ethylendiamintetraessigsäure (Na-Salz),
4,9% Netzmittel (Alkylbenzimidazolderivat),
17,5% NaCl,
26,3% Naphthalinsulfonsäure-Formaldehyd-Kondensationsprodukt (Na-Salz),
2,0% Wasser (Restfeuchte).

b) 83,8% des gleichen Rohfarbstoffes,
3,9% Glycin,
3,9% Ethylendiamintetraessigsäure (Na-Salz),
1,9% NaCl,
6,5% Wasser.

### Beispiel 3

Nach der im Beispiel 1 beschriebenen Arbeitsweise stellt man leicht redispergierbare, gut benetzbare, kaltwasserlösliche Farbstoffpräparate der folgenden Zusammensetzung her:

a) 60,3% Rohfarbstoff der Formel

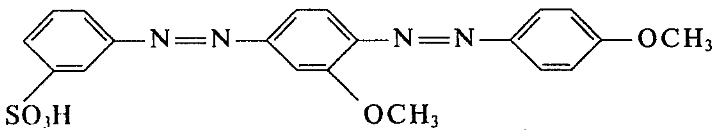

14,1% Ethylendiamintetraessigsäure (Na-Salz),
17,1% Naphthalinsulfonsäure-Formaldehyd-Kondensationsprodukt (Na-Salz),
3,5% Kondensationsprodukt aus Oleylsäure und Methyltaurin,
5,0% Wasser.

b) 65,3% des gleichen Rohfarbstoffes,
5,2% Ethylendiaminotetraessigsäure (Na-Salz),
19,2% Naphthalinsulfonsäure-Formaldehyd-Kondensationsprodukt (Na-Salz),
3,6% Kondensationsprodukt aus Oleylsäure und Methyltaurin,
6,7% Wasser.

Beispiel 4

Nach der im Beispiel 1 beschriebenen Arbeitsweise stellt man leicht redispergierbare, gut benetzbare, kaltwasserlösliche Farbstoffpräparate der folgenden Zusammensetzung her:

a) 41,1% Rohfarbstoff der Formel

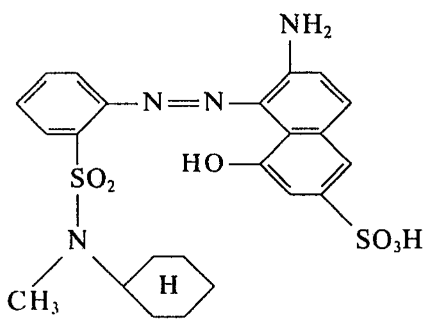

39,8% Naphthalinsulfonsäure-Formaldehyd-Kondensationsprodukt (Na-Salz),
8,1% Ethylendiamintetraessigsäure (Na-Salz),
6,0% Na-Cumolsulfonat,
5,0% Wasser.

b) 50% des gleichen Rohfarbstoffes,
4% Ethylendiamintetraessigsäure (Na-Salz),
5% KCl,
6% Naphthalinsulfonsäure-Formaldehyd-Kondensationsprodukt (Na-Salz),
5% Wasser.

Läßt man das Natriumsalz der Ethylendiamintetraessigsäure in den obigen Farbstoffpräparaten weg, so ist die Mindestanforderung der Kaltwasserlöslichkeit von 30 g/l bei 20°C bei einer Lösegeschwindigkeit von 120 Sekunden nicht erreichbar. Die Anschlämmung dieses Vergleichsproduktes mit Wasser im Verhältnis 1 : 1 ist klebrig und hochviskos, so daß es nicht möglich ist, eine Flotte, enthaltend 30 g/l Farbstoff, herzustellen, welche einwandfrei filtrierbar ist.

Beispiel 5

Nach der im Beispiel 1 beschriebenen Arbeitsweise stellt man das leicht redispergierbare, gut benetzbare, kaltwasserlösliche Farbstoffpräparat der folgenden Zusammensetzung her:

86,2% Rohfarbstoff der Formel

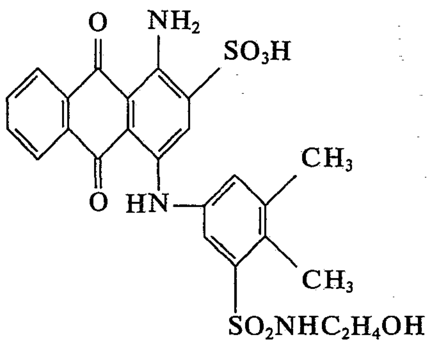

3,4% Sulfit-Ablauge,
3,4% Ethylendiamintetraessigsäure (Na-Salz),
1,7% Copolymer aus Ethylenoxid und Propylenoxid,
0,3% wasserlösliches Antischaummittel,
5,0% Wasser.

Beispiel 6

Nach der im Beispiel 1 beschriebenen Arbeitsweise stellt man das leicht redispergierbare, gut benetzbare, kaltwasserlösliche Farbstoffpräparat der folgenden Zusammensetzung her:

49,9% des Rohfarbstoffes der Formel

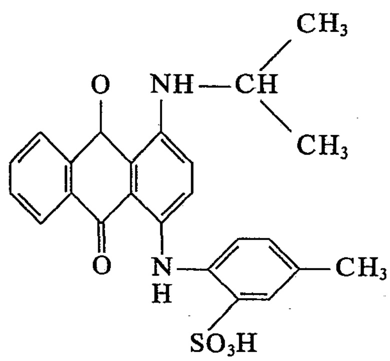

19,8% Sulfit-Ablauge,
22,3% Ethylendiamintetraessigsäure (Na-Salz),
3,0% Netzmittel (Alkylbenzimidazolderivat),
5,0% Wasser.

Beispiel 7

Nach der im Beispiel 1 beschriebenen Arbeitsweise stellt man das leicht redispergierbare, gut benetzbare, kaltwasserlösliche Farbstoffpräparat der folgenden Zusammensetzung her:

51,2% des Rohfarbstoffes aus Beispiel 6,
23,6% Sulfit-Ablauge,
15,1% Glycin,
5,1% Netzmittel (Alkylbenzimidazolderivat),
5,0% Wasser.

Beispiel 8

Nach der im Beispiel 1 beschriebenen Arbeitsweise stellt man das leicht redispergierbare, gut benetzbare, kaltwasserlösliche Farbstoffpräparat der folgenden Zusammensetzung her:

31,2% des Rohfarbstoffes aus Beispiel 3,
16,8% des Rohfarbstoffes aus Beispiel 2,
4,8% des Rohfarbstoffes der Formel

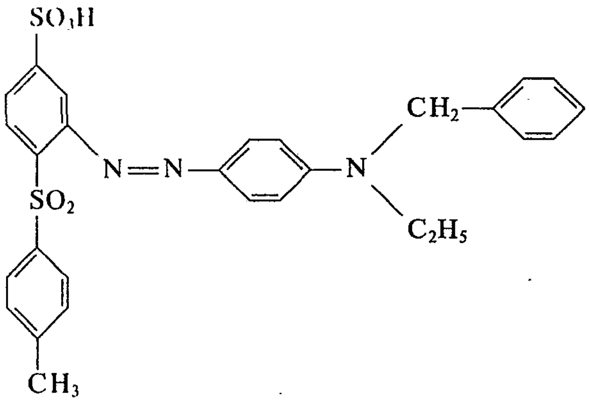

17,7% Ethylendiamintetraessigsäure (Na-Salz),
24,3% Sulfit-Ablauge,
5,2% Wasser.

Beispiel 9

Nach der im Beispiel 1 beschriebenen Arbeitsweise stellt man das leicht redispergierbare, gut benetzbare, kaltwasserlösliche Farbstoffpräparat der folgenden Zusammensetzung her:

85,1% des Rohfarbstoffes aus Beispiel 2,
4,0% Ethylendiamintetraessigsäure (Na-Salz),
4,0% Glycin,
2,0% NaCl,
4,9% Wasser.

Beispiel 10

Nach der im Beispiel 1 beschriebenen Arbeitsweise stellt man das leicht redispergierbare, gut benetzbare, kaltwasserlösliche Farbstoffpräparat der folgenden Zusammensetzung her:

66,8% des Rohfarbstoffes der Formel

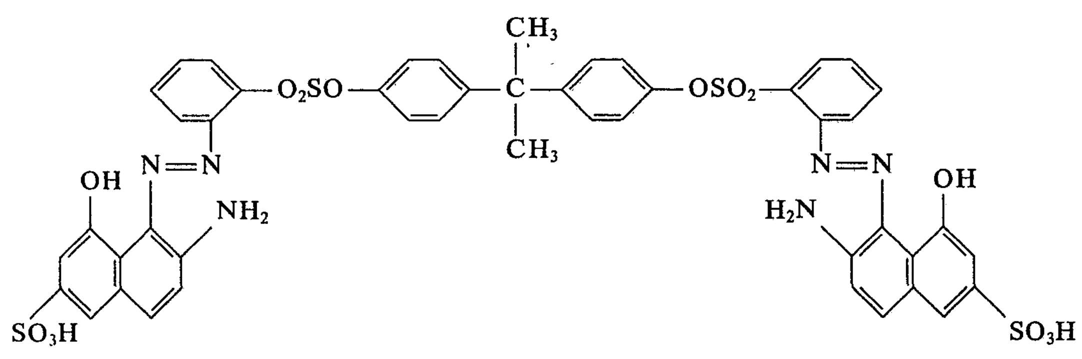

6,7% NaCl,
6,7% Naphthalinsulfonsäure-Formaldehyd-Kondensationsprodukt (Na-Salz),
4,0% Sulfit-Ablauge,
5,4% Ethylendiamintetraessigsäure (Na-Salz),
5,4% Kondensationsprodukt aus Oleylsäure und Methyltaurin,
5,0% Wasser.

Beispiel 11

a) Trockenstandardisierung

50,0 Teile Rohfarbstoff, gemahlen (Farbstärke 50%), der Formel

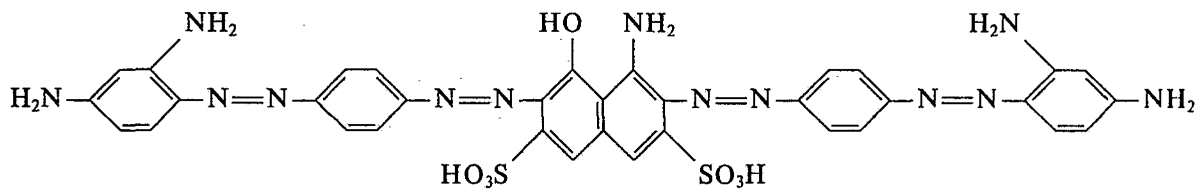

werden in einem Sunbeam-Mixer, Modell XPBA, mit 40,0 Teilen Natriumsulfat kalz. (gemahlen) und 10 Teilen Ethylendiamintetraessigsäure-Tetranatriumsalz (EDTA) 1 Minute gemischt. Zwecks vollständiger Durchmischung wird der Glasinhalt auf eine Unterlage geschüttet, zweimal »über den Kegel geschaufelt« und nochmals 1 Minute im Mixer homogenisiert.

Ein Vergleichsmuster ohne EDTA wird analog unter Zugabe von 50,0 Teilen gemahlenem Natriumsulfat kalz. hergestellt.

b) Naßstandardisierung via Sprühtrocknung

50,0 Teile Rohfarbstoff als Preßkuchen (Trockengehalt 38%) werden in einer 500-ml-Labor-Mikrosolmühle nach Zugabe von 40,0 Teilen Natriumsulfat kalz. sowie 10,0 Teilen EDTA (Na-Salz) und Einstellung des Mahlgut-Trockengehalts mit Wasser auf ca. 50% mittels Glaskugeln von 3 mm Durchmesser 1 Stunde bei 350 U/Min. gemahlen. Die Partikelgröße liegt dann unter 5 μm.

Das Mahlgut wird mit Waser auf ca. 30% Feststoffgehalt eingestellt und in einem Mini Spray Dryer 190 der Fa. Büchi AG, Flawil/Schweiz getrocknet, wobei die Eintrittstemperatur 160°C und die Ausgangstemperatur 80 bis 85°C beträgt.

Bestimmung der Kaltwasserlöslichkeit (KWL) des Farbstoffpräparates:
(Einstreu-Test)

Eine bestimmte Menge (in g) vom zu prüfenden Farbstoff-Präparat wird in 200 ml entsalztes Wasser bei 20°C in einem 400 ml Becherglas unter Rühren (Magnetrührer bei 750 U/Min.) gegeben und 2 Minuten gerührt. Dann wird die Farbstoff-Lösung durch einen Papierfilter (SS 1450 CV Durchmesser 7 cm) filtriert und mit 50 ml entsalztem Wasser gespült.

Als Kaltwasserlöslichkeit wird die höchste Konzentration des Farbstoffes im Wasser bewertet, die keinen Filterrückstand ergibt.

Prüfbefunde

| Muster gemäß | Löslichkeit (g/l) | | | | Farbstärke |
|---|---|---|---|---|---|
| | 90°C | 60°C | 30°C | KWL 2'-Test (20°C) | |
| Vergleichsmuster analog Beispiel 13a | 40 | 30 | 40 | <5 | 250% |
| Beispiel 13a | 60 | 60 | 60 | 10 | 250% |
| Beispiel 13b | 60 | 60 | 60 | 30 | 250% |

## Beispiel 12

### Trockenstandardisierung

Gemäß Beispiel 13a werden 55,3 Teile Rohfarbstoff, gemahlen (Farbstärke 500%) der Formel

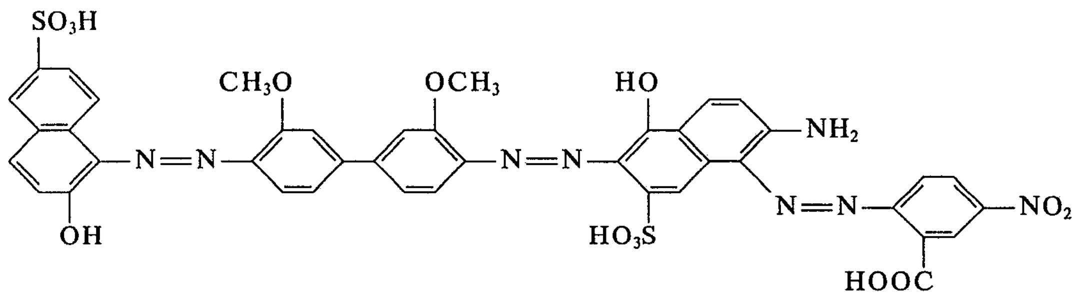

mit 4,5 Teilen Natriumcarbonat, 7,2 Teilen Tetranatriumpyrophosphat, 2,2 Teilen Natriumsulfat kalz., 20,8 Teilen Harnstoff und 10,0 Teilen EDTA (Na-Salz) gemischt.

Ein Vergleichsmuster ohne EDTA-Zusatz wird analog unter Zugabe von 30,8 Teilen Harnstoff hergestellt.

Alle Mischungskomponenten werden in gemahlener Form eingesetzt.

Prüfbefunde

| Muster gemäß | Löslichkeit (g/l) | | | | Farbstärke |
|---|---|---|---|---|---|
| | 90°C | 60°C | 30°C | KWL 2'-Test (20°C) | |
| Vergleichsmuster analog Beispiel 15 | 40 | 30 | 30 | <5 | 280% |
| Beispiel 15 | 50 | 40 | 40 | <5 | 280% |

## Beispiel 13

Nach der im Beispiel 1 beschriebenen Arbeitsweise stellt man das leicht redispergierbare, gut benetzbare, kaltwasserlösliche Farbstoffpräparat der folgenden Zusammensetzung her:

50 g Rohfarbstoff der Formel

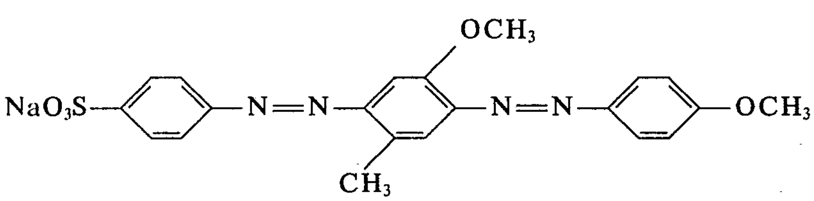

5 g $Na_3PO_4 \times 12\ H_2O$,
5 g Ethylendiamintetraessigsäure (Na-Salz),
5 g Netzmittel (Alkylbenzimidazoderivat),
27 g Ligninsulfonat.

Beispiel 14

Man schlämmt 278,4 Teile Preßkuchen des Aufhellers der Formel

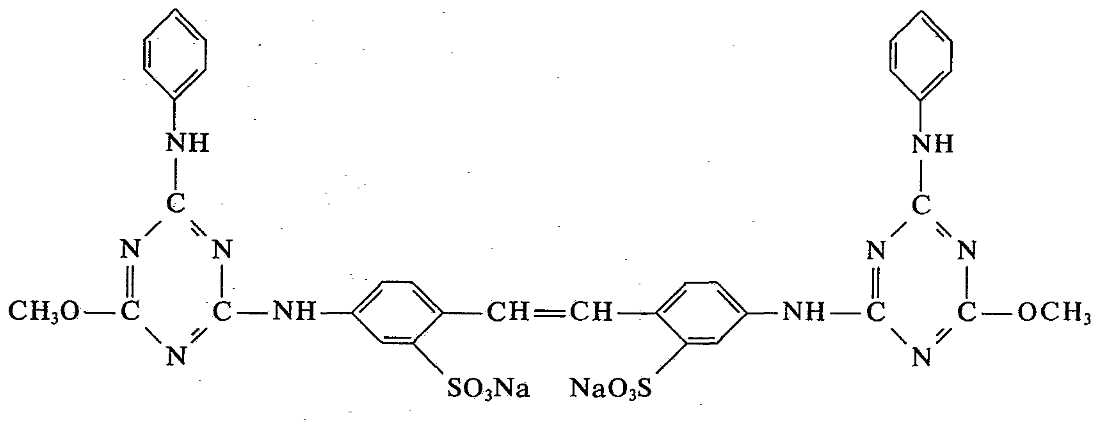

(enthaltend 100 Teile Wirkstoff) in ca. 90 Teilen Wasser an und gibt unter Rühren 1 Teil Ligninsulfonat (Na-Salz) zu. 3,4 Teile Ethylendiamintetraessigsäure (Na-Salz) werden dann zugegeben, wobei der beim Rühren des Slurrys entstandene Schaum zusammenbricht. Der so erhaltene niederviskose Slurry wird anschließend sprühgetrocknet. Man erhält ein in kaltem Wasser gut lösliches Aufhellerpräparat, welches gut benetzbar und redispergierbar ist.

Beispiel 15

Man schlämmt 289,9 Teile Preßkuchen des im Beispiel 17 angegebenen Aufhellers (enthaltend 100 Teile Wirkstoff), wie im Beispiel 17 angegeben, mit ca. 100 Vol.-Teilen Wasser an und versetzt mit 1 Teil Ligninsulfonat (Na-Salz) und 4,4 Teilen Glycin. Der so erhaltene niederviskose Slurry wird anschließend sprühgetrocknet. Man erhält ein in kaltem Wasser gut lösliches Aufhellerpräparat, welches gut benetzbar und redispergierbar ist.

**Patentansprüche**

1. Feste, kaltwasserlösliche Präparate nichtreaktiver, metallfreier anionischer Farbstoffe, dadurch gekennzeichnet, daß diese neben

a) 30—90 Gew.% Farbstoff noch
b) 1—25 Gew.% einer aliphatischen Aminocarbonsäure oder deren Salz, und
c) 0—50 Gew.% weitere Zusätze enthalten, wobei die Komponenten a) bis c) als wäßrige Lösung oder Suspension sprühgetrocknet werden.

2. Präparate gemäß Anspruch 1, dadurch gekennzeichnet, daß sie 2—50 Gew.% eines anionischen Dispergiermittels enthalten.

3. Präparate gemäß Anspruch 1, dadurch gekennzeichnet, daß sie 2—20, vorzugsweise 3—10 Gew.% einer aliphatischen Aminocarbonsäure oder deren Salz enthalten.

4. Präparate gemäß Ansprüchen 1 bis 3, dadurch gekennzeichnet, daß sie als aliphatische Aminocarbonsäure eine aliphatische Mono-$\alpha$-aminosäure, eine Monoiminopolycarbonsäure, eine Bis-$\alpha$-iminocarbonsäure, eine Polyethylenimin-N-polyessigsäure, ein lineares Betain oder die Alkalisalze dieser Verbindungen enthalten.

5. Präparate gemäß Anspruch 4, dadurch gekennzeichnet, daß sie als eine aliphatische Mono-$\alpha$-aminosäure eine solche der Formel I

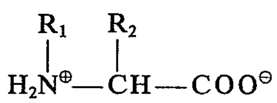

worin

$R_1$ Wasserstoff oder Methyl und
$R_2$ Wasserstoff, einen aliphatischen Rest mit einfacher oder verzweigter Kette der durch OH substituiert sein kann oder deren Alkalisalze enthalten.

6. Präparate gemäß Anspruch 5, dadurch gekennzeichnet, daß sie eine aliphatische Mono-$\alpha$-aminosäure der Formel I enthalten, worin $R_2$ einen $C_1-C_5$-Alkylrest oder einen $-(CH_2)_2OH$-Rest bedeutet.

7. Präparate gemäß Anspruch 4, dadurch gekennzeichnet, daß sie als Monoiminopolycarbonsäure eine solche der Formel II

$$R_4-\overset{R_3}{\overset{|}{N}}H^{\oplus}-\overset{R_5}{\overset{|}{C}}H-COO^{\ominus}$$

oder der Formel III

$$H_3N^{\oplus}-\overset{R_6}{\overset{|}{C}}H-COO^{\ominus}$$

worin

$R_3$ $-\overset{R_5}{\overset{|}{C}}H-COOH$ oder $-(CH_2)_2COOH$,

$R_4$ Wasserstoff, $-\overset{R_5}{\overset{|}{C}}H-COOH$, oder Alkyl$(C_1-C_{12})$,

$R_5$ Wasserstoff, einen aliphatischen Rest mit einfacher oder verzweigter Kette, der durch $-COOH$ und/oder $-OH$ substituiert sein kann, und

$R_6$ einen durch $-COOH$ substituierten aliphatischen Rest mit einfacher oder verzweigter Kette, der auch durch $-OH$ substituiert sein kann, bedeuten oder deren Alkalisalze enthalten.

8. Präparate gemäß Anspruch 7, dadurch gekennzeichnet, daß sie eine Monoiminopolycarbonsäure der Formel II oder III enthalten, wobei $R_5$ einen $C_1-C_5$-Alkylrest bedeutet, der durch COOH und/oder OH substituiert sein kann und $R_6$ einen durch $-COOH$ substituierten $C_1-C_5$-Alkylrest, der auch durch OH substituiert sein kann, bedeutet.

9. Präparate gemäß Anspruch 4, dadurch gekennzeichnet, daß sie als Bis-$\alpha$-aminocarbonsäure eine solche der Formel IV

$$^{\ominus}OOC-R-\overset{R_7}{\overset{|}{N}}H^{\oplus}-B-\overset{R_7}{\overset{|}{N}}H^{\oplus}-R-COO^{\ominus}$$

worin

R die Gruppe

$$-\underset{R_9}{\underset{|}{\overset{R_8}{\overset{|}{C}}}}- \quad \text{oder} \quad -(CH_2)_2-,$$

$R_7$ Wasserstoff, einen $C_1-C_{12}$-Alkylrest, der durch Hydroxy, Alkoxy und/oder Alkylamino substituiert sein kann, oder $-R-COOH$,

$R_8$ und $R_9$ unabhängig voneinander Wasserstoff oder Alkyl$(C_1-C_5)$ und

B die direkte Bindung oder einen zweiwertigen aliphatischen Rest

bedeuten, oder deren Alkalisalze enthalten.

10. Präparate gemäß Anspruch 9, dadurch gekennzeichnet, daß sie als Bis-$\alpha$-iminocarbonsäure eine solche der Formel IVa

$$^{\ominus}OOC-R-\overset{R_7}{\overset{|}{N}}H^{\oplus}-B'-\overset{R_7}{\overset{|}{N}}H^{\oplus}-R-COO^{\ominus}$$

worin R und $R_7$ die in Anspruch 9 angegebenen Bedeutungen haben, und B'

$$-CH_2-,\quad -\underset{CH_3}{CH}-\underset{CH_3}{CH}-,\quad -(CH_2)_q-$$

einen zweiwertigen Ether- oder Thioetherrest bedeutet, wobei q eine ganze Zahl von 3 bis 6 ist, und wenn ein $R_7$ oder beide $R_7$ Wasserstoff sind, kann q auch 2 sein, oder deren Alkalisalze enthalten.

11. Präparate gemäß Anspruch 4, dadurch gekennzeichnet, daß sie als Polyethylenimin-N-polyessigsäure eine solche der Formel V

$$H_2\overset{R_{10}}{N^{\oplus}}-CH_2-COO^{\ominus}$$

worin

$R_{10}$ 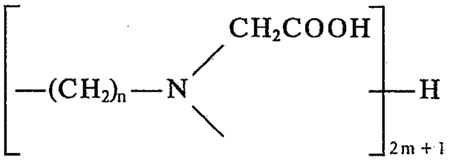

in der n eine Zahl von 1 bis 3, vorzugsweise 2, und m eine ganze Zahl von 1 bis 10, vorzugsweise von 2 bis 8, sind, bedeuten, oder deren Alkalisalze enthalten.

12. Präparate gemäß Anspruch 4, dadurch gekennzeichnet, daß sie als lineares Betain ein solches der Formel VI

$$R_{12}-\underset{R_{13}}{\overset{R_{11}}{N^{\oplus}}}-R'-COO^{\ominus}$$

worin

$R'$ einen zweiwertigen aliphatischen Rest mit 1 bis 3 C-Atomen,
$R_{11}$ und $R_{13}$ Methyl und
$R_{12}$ einen gegebenenfalls substituierten aliphatischen Rest darstellt,

oder dessen Alkalisalze enthalten.

13. Präparate gemäß Anspruch 12, dadurch gekennzeichnet, daß sie ein lineares Betain der Formel VI enthalten, worin R′ die Gruppe

$$-CH_2-CH{=}CH-,\quad -CH_2\underset{OH}{CH}-CH_2-\quad \text{oder}\quad -(CH_2)_n-$$

wobei n eine Zahl von 1 bis 3 ist und $R_{12}$ einen gegebenenfalls substituierten $C_1-C_{12}$-Alkylrest, $-(CH_2)_n-NH-CO-C_pH_{2p+1}$, in der n eine ganze Zahl von 1 bis 3 und p eine ganze Zahl, insbesondere 1 bis 5, bedeuten.

14. Präparate gemäß Anspruch 4, dadurch gekennzeichnet, daß sie als aliphatische Aminocarbonsäure Glycin, Nitrilotriessigsäure, Ethylendiamintetraessigsäure oder ein Betain der Formel

$$CH_3-CO-NH-(CH_2)_3-\underset{CH_3}{\overset{CH_3}{N^{\oplus}}}-CH_2COO^{\ominus}$$

oder die Alkalisalze dieser Verbindungen enthalten.

15. Präparate gemäß Ansprüchen 1 bis 14, dadurch gekennzeichnet, daß sie als Farbstoff einen Azo- oder Anthrachinonfarbstoff mit mindestens einer Sulfogruppe enthalten.

16. Präparate gemäß Anspruch 15, dadurch gekennzeichnet, daß sie als Farbstoff einen Azo- oder Anthrachinonfarbstoff mit mindestens einer Sulfogruppe enthalten, welcher zusätzlich mindestens eine Methoxy-, Amino-, $C_1-C_6$-Alkylamino- oder Di-$(C_1-C_6)$-Alkylaminogruppe aufweist.

17. Verfahren zur Herstellung der festen Farbstoffpräparate gemäß Anspruch 1, dadurch gekennzeichnet, daß man einen wasserlöslichen Farbstoff in Wasser unter Zusatz einer aliphatischen Aminocarbonsäure oder deren Salz, sowie gegebenenfalls weitere Zusätze anschlämmt oder löst, die Komponenten miteinander mischt und anschließend sprühtrocknet.

18. Verfahren gemäß Anspruch 17, dadurch gekennzeichnet, daß man die wäßrige Suspension der Komponenten vermahlt.

19. Verwendung der Präparate gemäß Anspruch 1 zum Färben oder Bedrucken von Textilmaterial aus Cellulose, vor allem von Baumwolle, aus Polyacrylnitril, Wolle oder aus synthetischem Polyamid.

## Claims

1. A solid, cold-water-soluble formulation of non-reactive, metal-free anionic dyes, which formulation contains, in addition to

a) 30—90% by weight of dye, also
b) 1—25% by weight of an aliphatic aminocarboxylic acid, or of a salt thereof, and
c) 0—50% by weight of further auxiliaries, said components a) to c) being spray-dried as aqueous solution or suspension.

2. A formulation according to claim 1, which contains 2—50% by weight of an anionic dispersing agent.

3. A formulation according to claim 1, which contains 2—20%, preferably 3—10%, by weight of an aliphatic aminocarboxylic acid, or of the alkali salt thereof.

4. A formulation according to any one of claims 1 to 3, wherein the aliphatic aminocarboxylic acid is an aliphatic mono-$\alpha$-amino acid, a monoiminopolycarboxylic acid, a bis-$\alpha$-iminocarboxylic acid, a polyethylenimine-N-polyacetic acid, a linear betain, or an alkali salt of one of these compounds.

5. A formulation according to claim 4 containing an aliphatic mono-$\alpha$-amino acid of the formula I

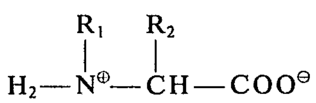

wherein

$R_1$ is hydrogen or methyl, and
$R_2$ is hydrogen, a straight chain or branched aliphatic radical which can be substituted by —OH; or an alkali salt thereof.

6. A formulation according to claim 5 containing an aliphatic mono-$\alpha$-amino acid of the formula I, wherein $R_2$ ist a $C_1-C_5$alkyl or $-(CH_2)_2OH$ radical.

7. A formulation according to claim 4 containing a monoiminopolycarboxylic acid of the formula II

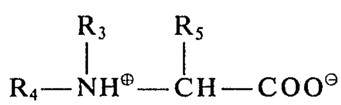

of the formula III

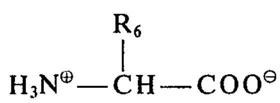

wherein

$R_3$ 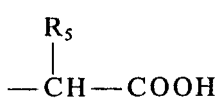 or $-(CH_2)_2COOH$,

$R_4$ is hydrogen, 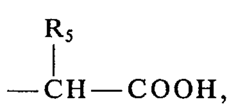, or $C_1-C_{12}$alkyl,

$R_5$ is hydrogen, a straight chain or branched aliphatic radical which can be substituted by —COOH and/or —OH, and

$R_6$ is a straight chain or branched aliphatic radical which is substituted by $-COOH$ and can also be substituted by $-OH$; or an alkali salt thereof.

8. A formulation according to claim 7 containing a monoiminopolycarboxylic acid of the formula II or III, wherein $R_5$ is a $C_1-C_5$alkyl radical which can be substituted by $-COOH$ and/or $-OH$, and $R_6$ is a $C_1-C_5$alkyl radical which is substituted by $-COOH$ and can also be substituted by $-OH$.

9. A formulation according to claim 4 containing a bis-$\alpha$-iminocarboxylic acid of the formula IV

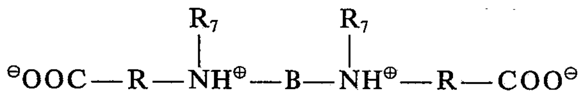

wherein

R is the group

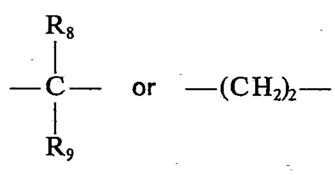

$R_7$ is hydrogen, or a $C_1-C_{12}$aliphatic radical which can be substituted by hydroxyl, alkoxy and/or alkylamino, or is $-R-COOH$,
$R_8$ and $R_9$ are each independently hydrogen or $C_1-C_5$alkyl,
B is the direct bond, or a bivalent aliphatic radical;

or an alkali salt thereof.

10. A formulation according to claim 9 containing a bis-$\alpha$-iminocarboxylic acid of the formula IVa

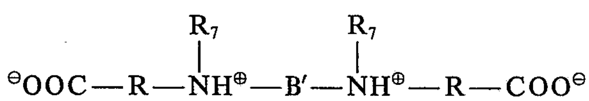

wherein R and $R_7$ are as defined in claim 9, and B' is

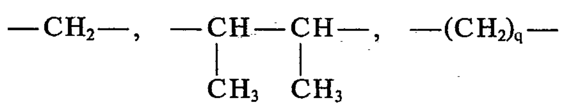

a bivalent ether or thioether radical, where q is an integer from 3 to 6, and, if one or both of substituents $R_7$ are hydrogen, q can also be 2; or an alkali salt thereof.

11. A formulation according to claim 4 containing a polyethylenimine-N-polyacetic acid of the formula V

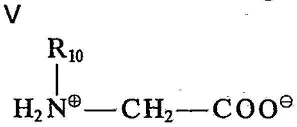

wherein $R_{10}$ is

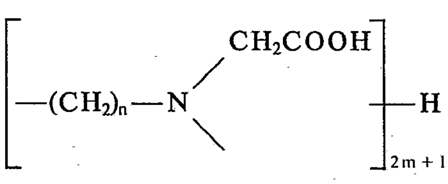

wherein n is a value from 1 to 3, preferably 2, and m is an integer from 1 to 10, preferably from 2 to 8; or an alkali salt thereof.

12. A formulation according to claim 4 containing a linear betain of the formula VI

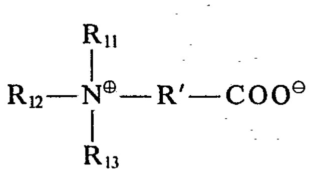

wherein

R' is a bivalent $C_1-C_3$aliphatic radical,
$R_{11}$ and $R_{13}$ are each methyl, and
$R_{12}$ is an unsubstituted or substituted aliphatic radical;

or an alkali salt thereof.

13. A formulation according to claim 12 containing a linear betain of the formula VI, wherein R' is the group

$-CH_2-CH=CH-$, 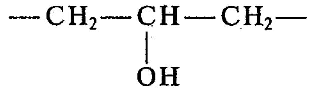 or $-(CH_2)_n$

in which n is a value from 1 to 3, and $R_{12}$ is an unsubstituted or substituted $C_1-C_{12}$alkyl radical, or is $-(CH_2)_n-NH-CO-C_pH_{2p+1}$, in which n is an integer from 1 to 3, and p is an integer, preferably from 1 to 5.

14. A formulation according to claim 4, wherein the aliphatic aminocarboxylic acid is glycine, nitriloacetic acid, ethylenediaminetetraacetic acid or a betain of the formula

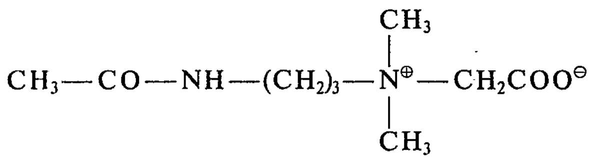

or an alkali salt of one of these compounds.

15. A formulation according to any one of claims 1 to 14, wherein the dye is an azo or anthraquinone dye containing at least one sulfo group.

16. A formulation according to claim 15, wherein the dye is an azo or anthraquinone dye containing at least one sulfo group, which dye additionally contains at least one methoxy, amino, $C_1-C_6$alkylamino or di($C_1-C_6$)alkylamino group.

17. A process for the preparation of a solid dye formulation according to claim 1, which process comprises suspending or dissolving a water-soluble dye in water with the addition of at least one aliphatic aminocarboxylic acid or salt thereof, and, if desired, further auxiliaries, mixing the components, and subsequently spray-drying the mixture.

18. A process according to claim 17, which comprises grinding the aqueous suspension of the components.

19. Use of the formulation according to claim 1 for dyeing or printing textile material made of cellulose, particularly cotton, or of polyacrylonitrile, wool or synthetic polyamide.

**Revendications**

1. Préparations solides solubles dans l'eau froide de colorants non-réactifs, exempts de métal, anioniques, caractérisées par le fait que ces préparations contiennent en plus:

a) de 30 à 90% en poids de colorant, encore
b) de 1 à 25% en poids d'un acide aminocarboxylique aliphatique ou de son sel, et
c) de 0 à 50% en poids d'autres additifs, les constituants a) à c) sous forme de solution ou de suspension aqueuse étant séchés par pulvérisation.

2. Préparations selon la revendication 1, caractérisées par le fait qu'elles contiennent 2 à 50% en poids d'un agent dispersant anionique.

3. Préparations selon la revendication 1, caractérisées par le fait qu'elles contiennent 2 à 20, de préférence 3 à 10% en poids d'un acide aminocarboxylique aliphatique ou de son sel.

4. Préparations selon la revendications 1 à 3, caractérisées par le fait qu'elles contiennent comme acide aminocarboxylique aliphatique un mono-$\alpha$-amino-acide aliphatique, un acide mono-iminopolycarboxylique, un acide bis-$\alpha$-iminocarboxylique, un acide polyéthylène-imine-N-polyacètique, une bétaïne linéaire ou les sels alcalins de ces composés.

5. Préparations selon la revendication 4, caractérisées par le fait qu'elles contiennent comme mono-$\alpha$-amino-acide aliphatique un de ceux ayant la formule I:

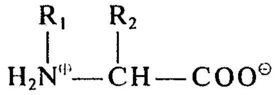

dans laquelle:

$R_1$ est un atome d'hydrogène ou un groupe méthyle, et
$R_2$ est un atome d'hydrogène, un reste aliphatique ayant une chaîne linéaire ou ramifiée, qui peut être substituée par OH ou bien ses sels alcalins.

6. Préparations selon la revendication 5, caractérisées par le fait qu'elles contiennent un mono-$\alpha$-aminoacide aliphatique de formule I, dans lequel $R_2$ est un reste alkyle en $C_1-C_5$ ou bien un reste $-(CH_2)_2OH$.

7. Préparations selon la revendication 4, caractérisées par le fait qu'elles contiennent comme acide monoiminopolycarboxylique un de ceux ayant la formule II:

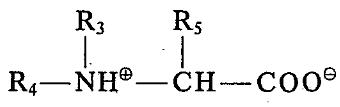

ou la formule III:

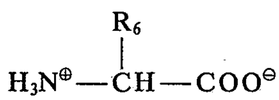

dans laquelle:

$R_3$ est 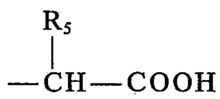 ou $-(CH_2)_2COOH$,

$R_4$ est un atome d'hydrogène, 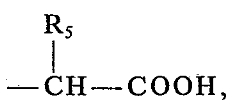 ou un groupe alkyle en $C_1-C_{12}$,

$R_5$ est un atome d'hydrogène, un reste aliphatique ayant une chaîne linéaire ou ramifiée, qui peut être substitué par $-COOH$ et/ou $-OH$, et
$R_6$ est un reste aliphatique substitué par $-COOH$ ayant une chaîne linéaire ou ramifiée, qui peut être substitué également par $-OH$, ou bien ses sels alcalins.

8. Préparations selon la revendication 7, caractérisées par le fait qu'elles contiennent un acide monoiminopolycarboxylique de formules II ou III, dans lesquelles $R_5$ est un reste alkyle en $C_1-C_5$ qui peut être substitué par COOH et/ou OH, et $R_6$ est un reste alkyle en $C_1-C_5$ substitué par $-COOH$, qui peut être substitué également par OH.

9. Préparations selon la revendication 4, caractérisées par le fait qu'elles contiennent comme acide bis-$\alpha$-aminocarboxylique un de ceux ayant la formule IV:

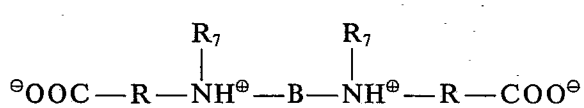

dans laquelle:

R est le groupe

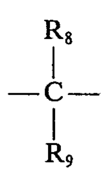 ou $-(CH_2)_2-$

$R_7$ est un atome d'hydrogène, un reste alkyle en $C_1-C_{12}$ qui peut être substitué par un radical hydroxyle, alcoxy et/ou alkylamino, ou bien un groupe $-R-COOH$,
$R_8$ et $R_9$ indépendamment l'un de l'autre, sont des atomes d'hydrogène ou des groupes alkyle en $C_1-C_5$, et
B est la liaison directe ou un reste aliphatique divalent, ou bien ses sels alcalins.

10. Préparations selon la revendication 9, caractérisées par le fait qu'elles contiennent comme acide bis-$\alpha$-iminocarboxylique un de ceux ayant la formule IVa:

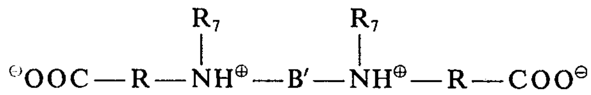

dans laquelle R et $R_7$ ont les significations données dans la revendication 9, et B' est

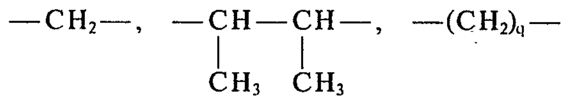

un reste éther ou thioéther divalent, q étant un nombre entier de 3 à 6, et quand un $R_7$ ou les deux $R_7$ sont des atomes d'hydrogène, q peut être également 2, ou ses sels alcalins.

11. Préparations selon la revendication 4, caractérisées par le fait qu'elles contiennent comme acide polyéthylène-imine-N-polyacétique un de ceux ayant la formule V:

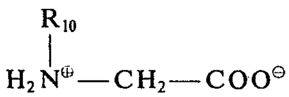

dans laquelle:

$R_{10}$ est 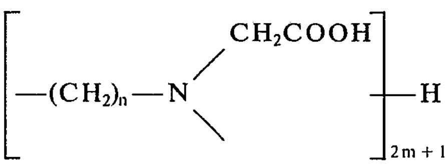

dans laquelle n est un nombre de 1 à 3, de préférence 2, et m est un nombre entier de 1 à 10, de préférence de 2 à 8, ou bien ses sels alcalins.

12. Préparations selon la revendication 4, caractérisées par le fait qu'elles contiennent comme bétaïne linéaire une de celles ayant la formule VI:

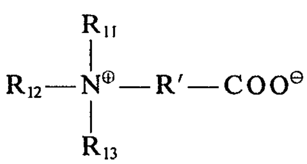

dans laquelle

| | |
|---|---|
| R' | est un reste aliphatique divalent ayant 1 à 3 atomes de carbone, |
| $R_{11}$ et $R_{13}$ | sont des groupes méthyle, et |
| $R_{12}$ | représente un reste aliphatique éventuellement substitué |

ou bien ses sels alcalins.

13. Préparations selon la revendication 12, caractérisées par le fait qu'elles contiennent une bétaïne linéaire de formule VI, dans laquelle R' est le groupe

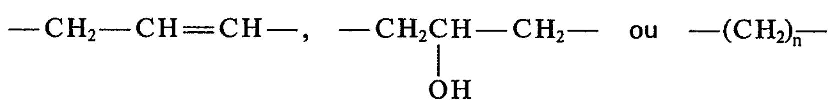

n étant un nombre de 1 à 3, et $R_{12}$ est un reste alkyle en $C_1-C_{12}$ éventuellement substitué, un reste $-(CH_2)_n-NH-CO-C_pH_{2p+1}$, dans lequel n est un nombre entier de 1 à 3, et p est un nombre entier, en partiqulier de 1 à 5.

14. Préparations selon la revendication 4, caractérisées par le fait qu'elles contiennent comme acide aminocarboxylique aliphatique la glycine, l'acide nitrilotriacétique, l'acide éthylènediaminetétracétique ou une bétaïne de formule:

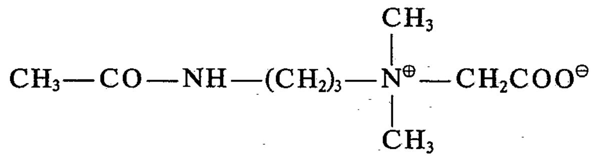

ou bien les sels alcalins de ces composés.

15. Préparations selon les revendications 1 à 14, caractérisées par le fait qu'elles contiennent comme colorant un colorant azoïque ou un colorant d'anthraquinone ayant au moins un groupe sulfo.

16. Préparations selon la revendication 15, caractérisées par le fait qu'elles contiennent comme colorant un colorant azoïque ou un colorant d'anthraquinone ayant au moins un groupe sulfo, qui présente en plus au moins un groupe méthoxy, amino, alkyl($C_1-C_6$)amino ou dialkyl($C_1-C_6$)amino.

17. Procédé de fabrication de préparations tinctoriales solides selon la revendication 1, caractérisé par le fait qu'on met en suspension ou qu'on dissout un colorant hydrosoluble dans l'eau en ajoutant un acide aminocarboxylique aliphatique ou son sel, ainsi qu'éventuellement d'autres additifs, qu'on mélange mutuellement les constituants, puis qu'on sèche par pulvérisation.

18. Procédé selon la revendication 17, caractérisé par le fait qu'on broie la suspension aqueuse des constituants.

19. Utilisation des préparations selon la revendication 1, pour teindre ou imprimer des matières textiles en cellulose, surtout en coton, en polyacrylonitrile, en laine ou en polyamide synthétique.